# EUROPEAN PATENT SPECIFICATION

(11) **EP 0 490 671 B1**
(45) Date of publication and mention of the grant of the patent: **27.03.1996**
(21) Application number: 91311554.9
(22) Date of filing: 12.12.1991
(51) Int. Cl.: G11B 23/02, G11B 17/26, G11B 23/03

(54) **Disk cartridge storage apparatus**
Speichergerät für Plattenkassetten
Appareil pour rangement de cassettes à disques

(30) Priority: 12.12.1990 JP 409857/90
(43) Date of publication of application: 17.06.1992
(73) Proprietor: MITSUBISHI DENKI KABUSHIKI KAISHA, Tokyo (JP)
(72) Inventor: Nakatsukasa, Naoyuki, c/o Mitsubishi Denki K.K., Amagasaki-shi, Hyogo-ken (JP); Yamashita, Tohru, c/o Mitsubishi Denki K.K., Amagasaki-shi, Hyogo-ken (JP)
(74) Representative: Mounteney, Simon James

(56) References cited:
- DE-A- 3 513 606
- DE-A- 3 638 912
- PATENT ABSTRACTS OF JAPAN, unexamined applications, P field, vol 11, no. 109, April 7, 1987, THE PATENT OFFICE OF JAPANESE GOVERNMENT, page 125 P 564

## Description

### BACKGROUND OF THE INVENTION

### Field of the Invention

The present invention relates generally to a disk cartridge storage apparatus for storing or accommodating a large number of disk cartridges each containing or enclosing a disk serving as an information recording medium. More particularly, the present invention is concerned with an improved disk cartridge storage apparatus which is capable of positively holding the disk cartridges at respective predetermined positions by preventing the cartridges once stored from jutting out or dislodging inadvertently.

### Description of the Related Art

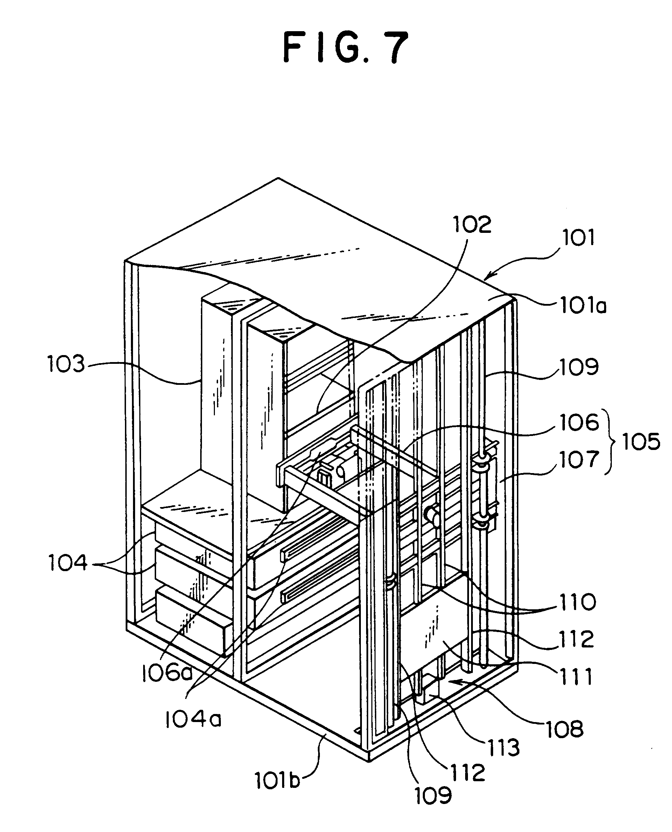

As a disk memory system incorporating a disk cartridge storage apparatus of the type mentioned above, there is heretofore known such a memory system as disclosed in, for example, JP-A-61-258366. For better understanding of the present invention, this prior art system will be described in some detail. Referring to Fig. 7 of the accompanying drawings which shows the prior art disk memory system in a perspective view, a stocker 103 disposed within a housing 101 of a box-like structure to serve for storage of disk cartridges is constructed to horizontally store or accommodate a multiplicity of disk cartridges 102 in a vertical array, wherein each of the disk cartridges (hereinafter also referred to simply as the cartridge) contains an information recording disk such as an optical disk, magnetic disk or the like serving as a recording medium. A pair of recording/reproducing units, denoted generally by a reference numeral 104, are disposed below the stocker 103 for writing/reading information or data in and from the disks contained in the cartridges.

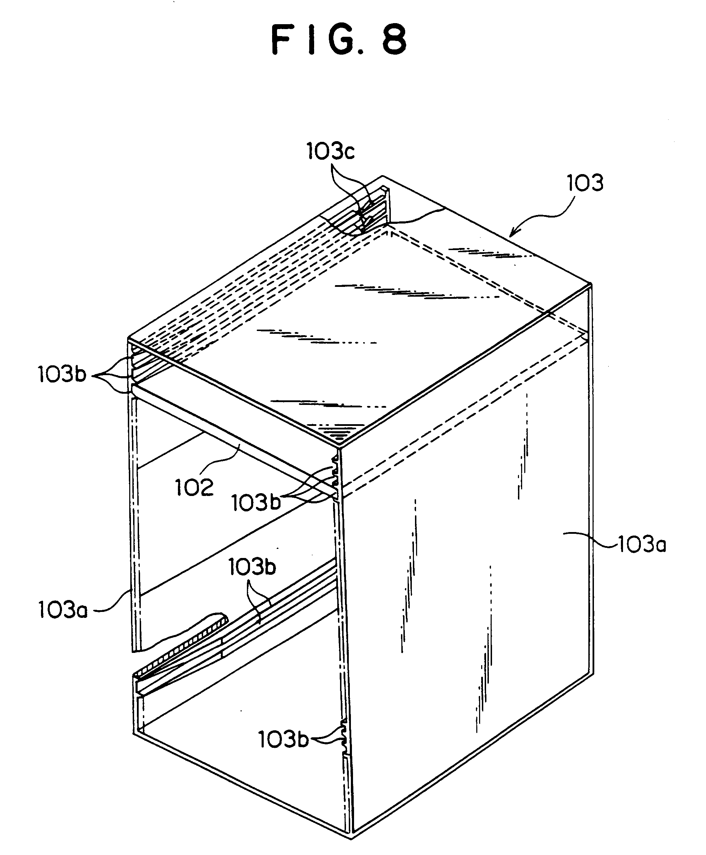

More specifically, referring to Fig. 8 of the accompanying drawings, the stocker 103 is configured in a box-like structure with front and rear sides opened, wherein opposite inner surfaces of both side walls 103a of the stocker 103 are each formed with a plurality of grooves 103b extending horizontally in parallel with one another with a predetermined distance therebetween in the vertical direction so that a pair of the grooves 103b facing in opposition to each other can slidably receive a cartridge 102 at both lateral side edge portions thereof, the cartridge 102 being then slidably moved to a predetermined storage position. Mounted on the top and bottom walls, respectively, of each horizontal groove 103b in the vicinity of the rear end are a pair of holding or retaining springs 103c which are disposed in opposition to each other for resiliently engaging the cartridge 102 placed at the storage position to thereby prevent it from moving or jutting out accidentally. To this end, the retaining spring 103c is made of a leaf spring having a substantially V-like shape.

Turning back to Fig. 7, there is disposed additionally within the housing 101 a carrier mechanism 105 for selectively taking out a desired one of the disk cartridges 102 from the stocker 103 to load it in the recording/reproducing unit 104. After data read/write operation, the cartridge 102 is unloaded from the recording/ reproducing unit 104 and stored again within the stocker 103 at the predetermined position by means of the carrier mechanism 105.

The carrier mechanism 105 is composed of a cartridge manipulation mechanism 106 for handling or manipulating the cartridge 102 to be placed within or taken out from the stocker 103 and the recording/reproducing unit 104, a lift platform or base 107 for carrying the cartridge manipulation mechanism 106, and a lift mechanism 108 for vertically moving the lift base 107 to the storage position of the stocker 103 where the cartridge 102 is to be stored or withdrawn as well as for carrying the selected disk cartridge to the recording/reproducing apparatus 104. For this purpose, the lift mechanism 108 is disposed within the housing 101 in a vertical orientation and composed of a pair of guide rails 109 fixedly secured to the housing 101 at upper and lower ends and extending vertically for guiding the movement of the lift platform 107, a pair of transmission belts 110 suspended around two pairs of driving pulleys and driven pulleys (not shown), respectively, which are mounted on the housing 101 at top and bottom walls thereof, and an electric motor 113 operatively coupled to the driving pulleys for simultaneously driving the pair of transmission belts 110. In this conjunction, it should be added that the driving pulleys are mounted on the rotatable shaft of the motor 113 at both ends thereof, respectively, while a pulley shaft for fixedly supporting the driven pulleys is rotatably supported at both ends by a pair of bearings mounted on the top plate of the housing 101, although illustration is omitted. A balancer weight 111 of a parallelpiped shape is secured to the transmission belts 110 at the side opposite to the lift platform 107 with the driven pulleys being interposed therebetween, wherein the balancer weight 111 is supported movably on and along a pair of upstanding guide plates 112. The guide rails 109 for guiding the vertical movement of the lift platform 107 have upper and lower ends secured rigidly to the top plate 101a and a bottom plate 101b, respectively, of the housing 101.

The disk memory system or apparatus described above is further equipped with a cartridge load/unload mechanism for transferring the disk cartridge with an external unit or mechanism as well as a controller for controlling operations of the whole system, although they are not shown.

The basic operation of the system described above is to selectively take out a desired one of the disk cartridges 102 from the stocker 103 for placing it in one of the recording/reproducing units 104 or reversely to place again the cartridge 102 within the stocker 103 at the originally allocated position. For convenience of the following description directed to the operation of the disk cartridge storage apparatus, it is assumed, by way of example only, that one of the disk cartridges 102 is to be transferred and loaded in one of the recording/reproducing units 104.

When a command is issued for taking out one of the disk cartridges 102 from the stocker 103 to place it in one of the recording/reproducing units 104, the controller (not shown) incorporated in the disk memory system responds to the command by correspondingly driving the electric motor 113 for thereby vertically moving the lift platform 107 until the cartridge manipulation mechanism 106 has reached a position at which a cartridge reception opening 106a of the cartridge manipulation mechanism 106 faces in opposition to the designated one of the disk cartridges 102, whereupon operation of the motor 113 is stopped. In this state, the cartridge manipulation mechanism 106 is extended or stretched horizontally for allowing it to grip the cartridge 102 of concern located within the stocker 103, which is then followed by contraction or retraction of the cartridge manipulation mechanism 106 to withdraw the cartridge 102 from the stocker 103. When the disk cartridge 102 thus selected has completely been taken out from the stocker 103, the motor 113 is again electrically energized to thereby cause the transmission belts 110 to move the lift platform 107 downwardly along the guide rails 109 until the lift platform 107 has attained a vertical position corresponding to an insertion slot 104a of the recording/reproducing unit 104. In that case, the disk cartridge may be upset, if desired, by rotating the cartridge manipulation mechanism 106 through an angle of 180 degrees around the supporting shaft thereof relative to the lift platform 107. Subsequently, the cartridge manipulation mechanism 106 is actuated to load the cartridge 102 into the recording/reproducing unit 104 through the insertion slot 104a. Upon completion of loading of the cartridge 102 in the recording/reproducing unit 104, the former is released from the state grasped by the cartridge manipulation mechanism 106, which is then allowed to retract to the starting position.

For re-storing of the disk cartridge 102 within the stocker 103 at the allocated position from the recording/ reproducing unit 104, operation is performed in the sequence reverse to the above. In this connection, it is noted that when the disk cartridge 102 having both lateral edges received slidably within the corresponding paired grooves 103b formed in the opposite side walls of the stocker 103 has been moved rearwardly to the predetermined or allocated storage position, the disk cartridge 102 is then retained in place by the pair of holding springs 103c mounted on the top and bottom walls of the groove 103b so that the cartridge 102 may remain stationary in place.

In the disk cartridge storage apparatus employed in the hitherto known disk memory system described above, the disk cartridge 102 stocked at a predetermined position within the stocker 103 is resiliently held under pressure between the upper and lower holding springs (or tension leaf springs) each of a generally V-like shape. In this conjunction, it will readily be understood that magnitude of the force or effort required for inserting the disk cartridge 102 between the pair of holding springs 103c is substantially equal to or larger than that required for pulling out the cartridge from the state sandwiched between the holding springs. As a consequence, when tension of the holding springs 103c is to be increased in order to increase the cartridge holding effort, a correspondingly increased force will then be required for inserting the cartridge between the holding springs, making difficult smooth insertion of the cartridge. Under the circumstances, the tension of the holding spring must necessarily be so selected as to be of such magnitude which provides substantially no obstacle to the insertion of the disk cartridge 102. In that case, however, the holding effort of the springs 103c will necessarily become too poor to positively and fixedly hold the disk cartridge therebetween, giving rise to a problem that the cartridge is likely to be dislodged or jut out unwantedly from the predetermined storage position within the stocker 103 under vibration thereof or other influences.

### SUMMARY OF THE INVENTION

With a view to solving the problem of the prior art disk cartridge storage apparatus described above, it is an object of the present invention to provide an improved disk cartridge storage apparatus of a structure which can facilitate insertion of a disk cartridge to a predetermined position within a stocker and which is capable of positively and securely holding the disk cartridge placed once at the storage position by preventing the disk cartridge from jutting out or dislodging inadvertently due to vibrations of the stocker or other influences.

In view of the above and other objects which will be apparent as description proceeds, there is provided, according to an aspect of the present invention, a disk cartridge storage apparatus which comprises a stocker having a pair of opposite side walls for slidably and removably accommodating a plurality of disk cartridges each containing an information recording disk, retaining means provided at the opposite side walls of the stocker for holding the disk cartridge placed within the stocker at a storage position, and biasing means for biasing the retaining means to a retaining position where the retaining means are caused to engage in retaining recesses formed in opposite side surfaces of the disk cartridge. The retaining means is so constructed that the force required for inserting the disk cartridge to the storage position within the stocker is smaller than the force required for taking out the disk cartridge from the stocker.

In a preferred embodiment, the retaining means includes a plurality of paired retaining members mounted by pivotal portions on the side walls of the stocker so as to be rotatable between the retaining position and an idle position. The retaining members have latch projections formed in inner surfaces of the retaining members facing the side walls of the cartridge, respectively. The latch projections are engageable in retaining recesses formed in opposite side walls of the cartridge, respectively, at the retaining position. The latch projections are arranged such that a drag applied to the cartridge by the retaining means due to the engagement between the latch projections and the retaining recesses, respectively, upon insertion of the cartridge is smaller than a drag applied to the cartridge by the retaining members due to the engagement between the latch projections and the cartridge upon withdrawal thereof.

Preferably, each of side walls of the stocker is provided with a length of vertically extending groove and a plurality of guide grooves extending horizontally from the vertical groove. Each of the retaining members includes the pivotal portion of a cylindrical shape, a flat supporting portion extending from the pivotal portion in a direction orthogonal to the axis thereof, and the latch projection of an arcuate shape projecting from an inner side of the supporting portion, the cylindrical pivotal portion being rotatably fitted in the vertical groove formed in the side wall of the stocker with the supporting portion being slidably fitted in one of the horizontal guide grooves.

By virtue of the above-mentioned structure of the disk cartridge storage apparatus according to the invention in which the effort required for inserting the disk cartridge to the storage position within the stocker is smaller than the effort involved for pulling out the cartridge from the stored position, insertion of the cartridge can be facilitated and at the same time the disk cartridge once placed within the stocker is prevented from dislocation and/or jutting out from the stored position even under vibrations of the stocker or other influences because a greater effort is required for taking out from the stocker the cartridge once placed at the storage position when compared with the effort required for insertion of the cartridge.

The above and other objects, features and advantages of the present invention will become more readily apparent upon consideration of the following description of a preferred embodiment thereof taken in conjunction with the accompanying drawings.

### BRIEF DESCRIPTION OF THE DRAWINGS

Fig. 1 is a perspective view showing a disk memory system incorporating a disk cartridge storage apparatus according to an embodiment of the present invention;
Fig. 2 is a perspective view showing a main portion of the disk memory system;
Fig. 3 is a perspective view showing on an enlarged scale the disk cartridge storage apparatus of Fig. 1 with several parts being shown in a disassembled state;
Fig. 4 is a partial sectional view for illustrating operation of retaining means shown in Fig. 3 when a disk cartridge is inserted;
Fig. 5 is a fragmentary sectional view for illustrating operation of the retaining means shown in Fig. 3 upon withdrawing of the disk cartridge;
Fig. 6 is a perspective view showing a disk cartridge containing a disk with a portion being broken away;
Fig. 7 is a perspective view showing, by way of example, a disk memory equipment incorporating a disk cartridge storage apparatus known heretofore; and
Fig. 8 is a perspective view showing the disk cartridge storage apparatus of Fig. 7 with parts being broken away.

### DETAILED DESCRIPTION OF THE PREFERRED EMBODIMENTS

Now, the present invention will be described in detail in conjunction with a preferred or exemplary embodiment thereof by reference to the accompanying drawings.

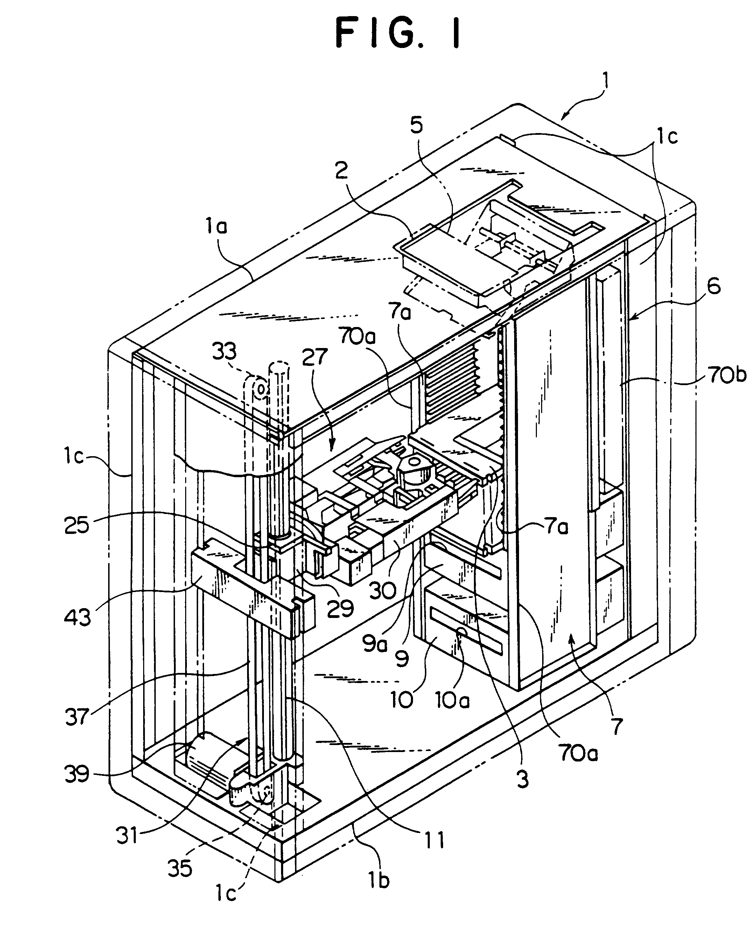

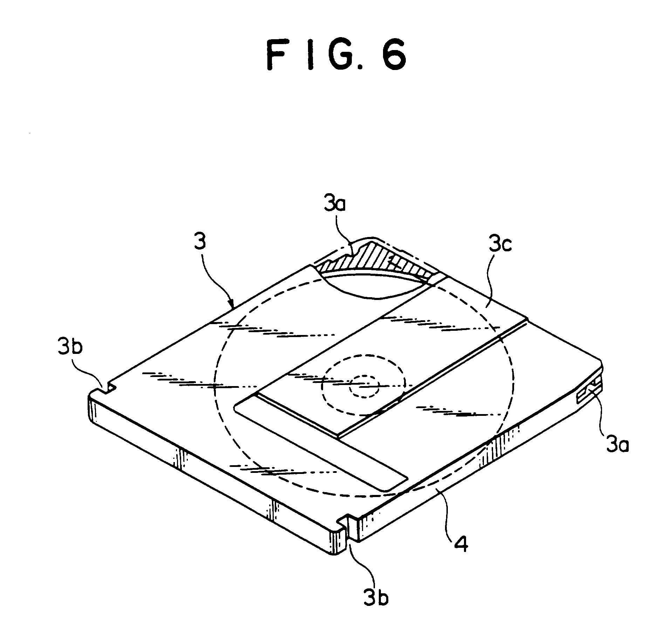

Fig. 1 is a perspective view generally showing a structure of a disk memory system or equipment incorporating a disk cartridge storage apparatus according to an embodiment of the present invention. On the other hand, Fig, 6 shows in a perspective view a disk cartridpe adapted to be stored or stocked in the disk cartridge storage apparatus shown in Fig. 1. Referring first to Fig. 6, there is enclosed or encased within the cartridge 3 a disk 4 which may be an optical disk, a magnetic disk or the like data or information recording medium. As seen in the figure, the cartridge 3 has side surfaces or walls formed with a pair of retaining recesses 3a each of an arcuate section, and a pair of notches 3b to be engaged by cartridge grasping hooks of a cartridge manipulation mechanism, the side walls being adapted to be engaged by retaining members, which will be described later, upon insertion of the cartridge into the disk cartridge storage apparatus. The retaining recesses 3a are provided at positions closer to the rear side wall of the cartridge while the notches 3b are formed at positions near to the front side wall. Further, as can be seen in Fig. 6, there is provided in opposite surfaces of the cartridge 3 a shutter 3c which is opened when information or data is to be recorded on the disk 4 or read therefrom.

Turning to Fig. 1, the disk memory equipment includes a housing 1 of a box-like structure comprising top and bottom plates 1a and 1b of a rectangular shape disposed in parallel with one another and interconnected at four corners by four supporting members 1c, respectively, each of the plates being formed of a metal material in an L-like cross-section, and five panels for covering the planes of the parallelpiped skeleton, respectively, except for the bottom plane. Formed in the top plate 1a of the housing 1 is an access opening 2 underneath which there is disposed a cartridge loading/unloading mechanism 5 for accepting the disk cartridge 3 in the housing 1 or discharging it therefrom, as occasion requires. Disposed within the housing 1 below the cartridge loading/unloading mechanism 5 is the disk cartridge storage apparatus 6 according to the invention for removably accommodating or storing a large number of disk cartridges 3 in the form of a vertically arrayed stack.

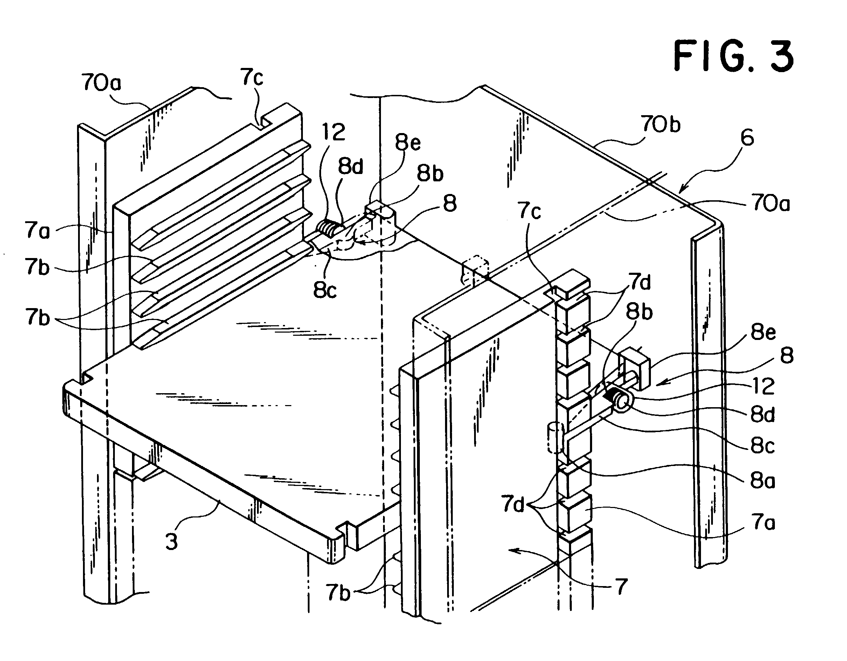

As is shown in Fig. 3, the disk cartridge storage apparatus, generally denoted by a numeral 6, includes a stocker 7 of a box-like structure having front and rear sides opened, a plurality of pairs of retaining members 8 operatively coupled to both side walls 7a of the stocker 7 in equidistant vertical arrays, respectively, to serve as the retaining means for holding the cartridge 3 stored in place within the stocker 7, and coil springs 12 constituting the biasing means for resiliently biasing the associated retaining members 8 to retaining positions where the retaining members 8 are forced to engage in retaining recesses 3a formed in both side walls of the cartridge 3, respectively. It is important to note that each of the retaining members 8 is so constructed that an effort required for inserting the cartridge 3 within the stocker 7 is smaller than that required for withdrawing the cartridge 3 from the stocker 7 according to a teaching of the invention.

The stocker 7 is of a box-like structure including a pair of vertical side walls 7a, which are disposed in opposition to each other with such a distance between the opposing inner surfaces thereof which is slightly greater than the width of the disk cartridge 3 to be accommodated within the stocker, top and bottom plates (not shown) for interconnecting the side plates at upper and lower ends thereof, respectively, and rectangular side panels 70a and a rectangular rear panel 70b covering the side walls and the rear side, respectively, of the box-like structure. Each of the paired side plates 7a has the inner surface formed with a plurality of elongated protrusions 7b extending in parallel with one another over a substantially whole width of the side plate with an equal distance vertically formed between the adjacent protrusions 7b so that each disk cartridge 3 can be supported at and along both side edge portions thereof by a corresponding pair of the protrusions 7b facing in opposition to each other, as viewed in the horizontal direction.

Each of the retaining members 8 is pivotally mounted on the side wall or plate 7a of the stocker 7 by means of a pivotal portion 8a of a cylindrical shape so as to be rotatable or swingable between a latching position and a non-latching position. Further, each of the retaining members 8 is integrally formed with a latch projection 8b on the inner side surface facing the side wall of the cartridge 3 at such a position where the latch projection 8b can engage in the retaining recess 3a (i.e. at the retaining position). In this conjunction, each of the retaining members 8 is realized such that the resistance or drag applied to the cartridge 3 by the retaining member 8 due to engagement between the cartridge 3 and the latch projection 8b upon inserting of the cartridge 3 is smaller than the drag applied to the cartridge 3 by the retaining member 8 due to engagement between the cartridge 3 and the latch projection 8b upon withdrawing of the cartridge 3 from the stocker 7.

Further referring to Fig. 3, each of the side walls 7a of the stocker 7 has an outer surface formed with a length of groove 7c which has a channel-like cross-section and extends in the vertical direction together with a plurality of guide grooves 7d extending in parallel with one another and orthogonally to the vertical groove 7c. On the other hand, each retaining member 8 includes the aforementioned cylindrical pivotal portion 8a formed at a front end, a flat supporting section 8c extending from the pivotal portion 8a in the direction orthogonal to the axis thereof, and an arcuate latch projection 8b projecting inwardly from the supporting section 8c, the cylindrical pivotal portion 8a being pivotally fitted in the vertical groove 7c of the stocker 7. The supporting section 8c is adapted to be slidably fitted in the horizontal groove 7d.

Formed in the outer side surface of the flat supporting section 8c of each retaining member 8 is a cylindrical spring holder stud 8d projecting outwardly, wherein the coil spring 12 is mounted around the spring holder stud 8d. The coil spring 12 has one end abutting against the inner surface of the side panel 70a of the stocker and the other end abutting against the confronting side surface of the supporting section 8c of the retaining member 8. Consequently, each retaining member 8 is resiliently urged by the coil spring 12 so as to rotate inwardly away from the side panel 70a about a fulcrum defined by the pivotal portion 8a. The inward rotation or swing of the retaining member 8 is, however, delimited by the fact that the supporting section 8c bears against the bottom of the horizontal guide groove 7d formed in the side plate 7a of the stocker 7.

Further formed integrally with each retaining member 8 at a rear end thereof is a stopper 8e which is adapted to bear against the rear side wall of the cartridge 3 upon insertion thereof into the stocker 7, thereby delimiting the storage position of the disk cartridge 3 within the stocker 7.

Turning back to Fig. 1, disposed below the stocker 7 are two data recording/reproducing units 9 and 10 which are aligned vertically for reading and/or writing information from or into the disk which is encased within the cartridge 3 and which may be an optical disk, a magnetic disk or the like recording medium. The recording/reproducing units 9 and 10 are fixedly secured to the side plates 7a of the stocker 7 by appropriate securing means such as screws or threaded bolts (not shown) and can be removed from the stocker 7 by detaching the securing means and slidingly moving the units 9 and 10 rearwardly along guide rails (not shown) installed on the side plates 7a of the stocker.

Here, it is to be noted that the recording/reproducing units 9 and 10 are so positioned that cartridge insertion slots 9a and 10a thereof substantially align with the openings making appearance in the front side of the stocker 7, as viewed in the vertical direction. In addition, the number of the recording/reproducing units 9 and 10 which can be installed within the housing 1 is never limited to two but one or more than two recording/reproducing units may be installed, if desired.

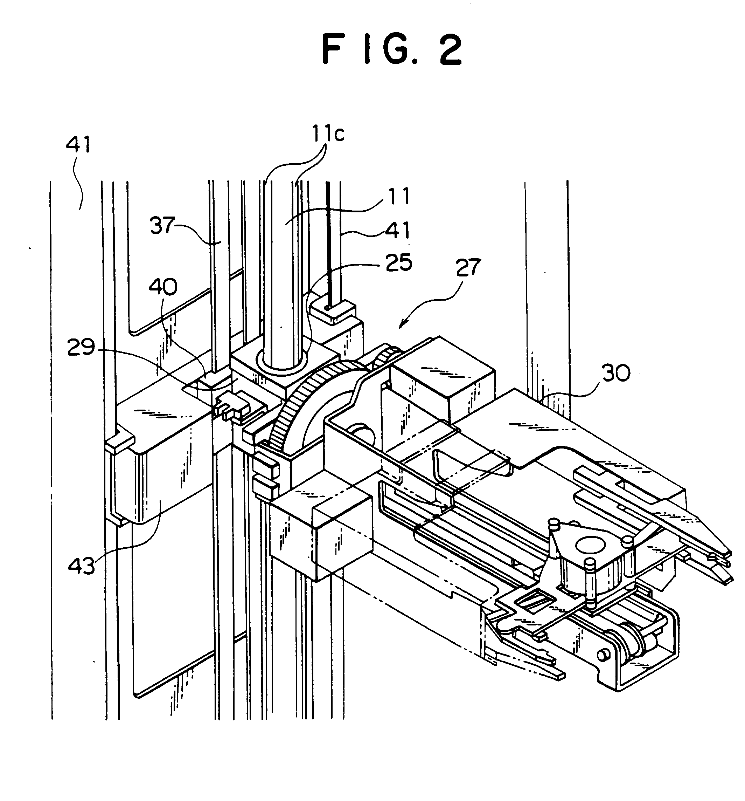

Disposed as extending vertically within the housing 1 is a guide shaft 11 which has upper and lower ends fixedly secured to the top plate 1a and the bottom plate 1b of the housing 1, respectively. As shown in greater detail in Fig. 2, the guide shaft 11 comprises a ball spline having a plurality of vertically extending ball rolling grooves 11c formed in the outer circumferential surface and it is fitted with a ball nut 25 which can slidably move on and along the ball spline 11 by virtue of balls (not shown) disposed rollingly within the ball grooves. With this structure, the ball nut 25 is inhibited from rotating relative to the guide shaft 11 in the course of sliding along it.

Further referring to Fig. 2, there is supported on the guide shaft 11 through the medium of the ball nut 25 a carrier mechanism 27 which is adapted to move vertically along the guide shaft 11 by means of a lift mechanism 31 selectively between the cartridge load/unload mechanism 5, the stocker 7 and the recording/reproducing units 9, 10 to thereby carry or transport the disk cartridge 3 for insertion or transfer thereof. More specifically, the carrier mechanism 27 includes a lift platform 29 secured to the ball nut 25 to be movable along the guide shaft 11 in the vertical direction through the medium of the ball nut 25, and a cartridge manipulation mechanism 30 which is rotatably supported on the lift platform 29 for movement in the horizontal direction toward and away from the cartridge load/unload mechanism 5, the stocker 7 and the recording/reproducing units 9 and 10 for the purposes of transportation, insertion or withdrawal of the cartridge 3.

Referring again to Fig. 1, the lift mechanism 31 includes a driven pulley 33 and a driving pulley 35 mounted at top and bottom portions of the housing 1, respectively, an endless cord-like belt 37 such as a timing belt or the like which is suspended between and around the driven and driving pulleys 33 and 35 and coupled to the lift platform 29, an electric motor 39 connected to the driving pulley 35 for rotationally driving the driving pulley 35, and a balance weight 43 which is coupled to the endless belt 37 at the side opposite to the lift platform 29 between the driven and driving pulleys 33 and 35 arid which can move up and down along a pair of guide plates 41 disposed vertically within the housing 1 as guide means.

The driving pulley 35 is fixedly mounted on a rotatable output shaft of the motor 39, while the driven pulley 33 is rotatably mounted on the top plate 1a of the housing 1 by appropriate means.

It is preferred that the balance weight 43 has a weight substantially equal to a sum of weights of the lift platform 29 and the cartridge manipulation mechanism 30 mounted thereon for the purpose of mitigating the load imposed on the motor 39 upon up or down travel of the lift.

Now, description will be directed to the operation of the disk cartridge storage apparatus of the structure described in the foregoing. When a command is issued for selecting one of the disk cartridges accommodated within the stocker 7 to insert it into the recording/reproducing unit 9 or 10, a controller (not shown) incorporated in the apparatus responds to the command by generating a control signal by which the motor 39 of the lift mechanism 31 is electrically energized to rotate the driving pulley 35. As a result of this, the endless belt 37 is moved between and around the driving pulley 35 and the driven pulley 33. Consequently, the lift base or platform 29 coupled to the endless belt 37 is moved up or down along the guide shaft 11 through the interposed ball nut 25 to a target position where the disk cartridge of concern is stored. In the meantime, the cartridge manipulation mechanism 30 is maintained in the horizontal state, needless to say. When the lift platform 29 has reached the target position, the motor 39 is deenergized. In this state, the cartridge manipulation mechanism 30 is extended or stretched horizontally for gripping the disk cartridge of concern, after which the cartridge manipulation mechanism 30 is contracted or retracted to withdraw the cartridge 3 from the stocker 7. When the cartridge 3 has completely been withdrawn from the stocker 7, the motor 39 is again energized to move downwardly the lift platform 29 along the guide shaft 11 with the aid of the driving pulley 35 and the endless belt 37 to a height level corresponding to the insertion slot 9a or 10a of the recording/reproducing unit 9 or 10. At this time point, the cartridge manipulation mechanism 30 may be upset by revolving it through an angle of 180 degrees relative to the lift platform 29, if desired. Subsequently, the cartridge manipulation mechanism 30 is stretched to insert the disk cartridge 3 into the insertion slot 9a or 10a of the recording/reproducing unit 9 or 10. Upon completion of insertion of the disk cartridge, the disk cartridge 3 is released from the state gripped by the cartridge manipulation mechanism 30, whereon the latter is contracted or retracted to the starting position.

Operation of the apparatus for unloading the cartridge 3 from the recording/reproducing unit 9 or 10 to re-store it within the stocker 7 at the predetermined position is performed in the sequence reverse to the above.

For storing or placing a disk cartridge 3 within the stocker 7 at a predetermined position, the cartridge 3 is forced to move inwardly or rearwardly within the stocker 7 along a corresponding pair of the oppositely facing protrusions 7b formed in both side plates 7a, respectively, by means of the cartridge manipulation mechanism 30. In this case, both corner portions of the leading end of the cartridge 3 engage the latch projections 8b of the corresponding retaining members 8 mounted on both side plates 7a, respectively, of the stocker 7, whereby the retaining members 8 are caused to rotate or swing outwardly about the fulcrums defined by the respective pivotal portions 8a against the resilient effort of the coil springs 12 while the cartridge 3 is inserted until the leading end thereof bears against the stoppers 8e formed at the rear ends of the retaining members 8, respectively. When the leading end of the cartridge 3 is brought into contact with the stoppers 8e in this manner, the retaining members 8 are urged to rotate inwardly about the pivotal portion 8a by the coil springs 12, as a result of which the latch projections 8b of the retaining members 8 engage in the retaining recesses 3a formed in the side walls, respectively, of the cartridge 3, which is thus positively and securely held and prevented from dislodging or jutting out from the stocker 7.

When the disk cartridge 3 is to be taken out from the stocker 7, the cartridge 3 is subjected to a withdrawing force by the cartridge manipulation mechanism 30. When a turning moment applied to the retaining members 8 to rotate or swing outwardly about respective pivotal portions 8a due to the withdrawing effort becomes greater than a turning moment of the opposite direction applied by the coil springs 12, the retaining members 8 are forced to rotate outwardly about the respective pivotal portions 8a, with the result that the latch projections 8a of the retaining members 8 are caused to disengage from the retaining recesses 3a of the cartridge 3. Thus, the disk cartridge 3 can now be withdrawn outwardly from the stocker 7 along the corresponding pair of protrusions 7b formed in opposition to each other in both side plates 7a, respectively, of the stocker 7.

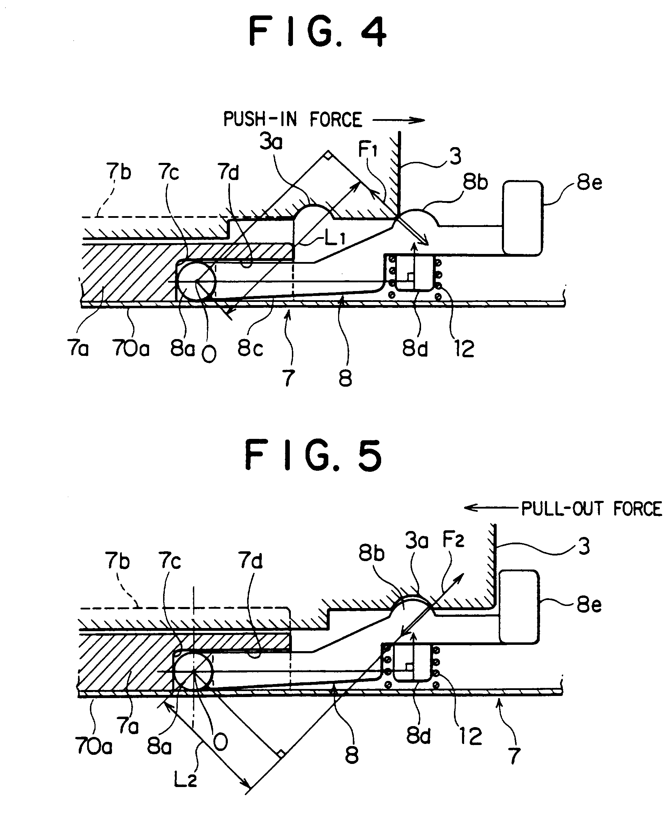

As is illustrated in Figs. 4 and 5, the drag (reaction) applied to the cartridge 3 by the retaining members 8 upon insertion of the cartridge due to engagement between the latch projections 8b and the retaining recesses 3a is smaller than the drag (reaction) applied to the cartridge 3 by the retaining members 8 upon withdrawal of the cartridge 3 due to the engagement between the latch projections 8b and the cartridge 3. More specifically, when the drags applied to the cartridge 3 by the latch projections 8b of the retaining members 8 upon insertion and withdrawal are represented by F1 and F2, respectively, then it holds true that F1< F2, because lengths L1 and L2 of lines extending from the center O of the pivotal portion 8a normally to the lines which indicate the directions of the drags F1 and F2, respectively, are in such a relation that L1 < L2, although the turning moment applied to retaining members 8 by the coil springs 12 remains invariable regardless of whether the cartridge 3 is being inserted or withdrawn because the resilient force applied to the latch projections 8b by the coil springs 12 is constant independent of insertion or withdrawal of the disk cartridge 3. This means that the effort required for withdrawal of the cartridge 3 is greater than that required for inserting the cartridge 3. As a result, by selecting the spring force of the coil spring 12 at an appropriate value, insertion of the cartridge 3 can be effected smoothly with a relatively small effort, while the cartridge 3 once accommodated within the stocker 7 at a predetermined position can effectively be prevented from jutting out or dislodging by virtue of the positive engagement between the latch projections 8b and the retaining recesses 3a.

As will now be understood from the foregoing description, the disk cartridge storage apparatus according to the invention comprises the stocker for accommodating the disk cartridges each containing a data recording disk and which permits the cartridges to be slidably inserted and withdrawn, pairs of retaining members each for holding a cartridge at a predetermined position, and biasing means for biasing the retaining members to the engaging or latching positions where the retaining members engage in the retaining recesses formed in both side walls of the cartridge, respectively. The retaining members are constructed such that the force or effort required for inserting the cartridge into the stocker is smaller than that required for withdrawing the former from the latter. This serves to facilitate insertion of the cartridge into the stocker while the cartridges once placed within the stocker at the respective storage positions can positively be prevented from dislodgement from the stored state or jutting out from the stocker even under vibration thereof or other influences, to significant advantages.

While the present invention has been described in conjunction with a preferred embodiment thereof, many modifications and variations will be apparent to those of ordinary skill in the art, which fall under the scope of the following claims.

## Claims

1. A disk cartridge storage apparatus, comprising:
a stocker (7) having a pair of opposite side walls (7a) for slidably and removably storing disk cartridges (3) each containing an information recording disk (4);
retaining means (8) provided at the opposite side walls (7a) of said stocker (7) for holding a disk cartridge (3) placed within said stocker (7) at a storage position; and
biasing means (12) for biasing said retaining means (8) to a retaining position where said retaining means (8) are caused to engage in retaining recesses (3a) formed in opposite side surfaces of said disk cartridge (3), respectively;
wherein said retaining means (8) are so constructed that the force required for inserting said disk cartridge (3) to said storage position within said stocker (7) is smaller than the force required for taking out said disk cartridge (3) from said stocker (7).

2. A disk cartridge storage apparatus according to claim 1, wherein said retaining means includes a plurality of paired retaining members mounted by pivotal portions on the side walls of said stocker so as to be rotatable between said retaining position and an idle position, said retaining members having latch projections formed in inner surfaces of said retaining members facing the side walls of said cartridge, respectively, said latch projections being engageable in retaining recesses formed in opposite side walls of said cartridge, respectively, at said retaining position, said latch projections being arranged such that a drag applied to said cartridge by said retaining means due to the engagement between said latch projections and said retaining recesses, respectively, upon insertion of said cartridge is smaller than a drag applied to said cartridge by said retaining members due to the engagement between said latch projections and said cartridge upon withdrawal thereof.

3. A disk cartridge storage apparatus according to claim 2, wherein each of side walls of said stocker is provided with a length of vertically extending groove and a plurality of guide grooves extending horizontally from said vertical groove, and wherein each of said retaining members includes said pivotal portion of a cylindrical shape, a flat supporting portion extending from said pivotal portion in a direction orthogonal to the axis thereof, and said latch projection of an arcuate shape projecting from an inner side of said supporting portion, said cylindrical pivotal portion being rotatably fitted in said vertical groove formed in said side wall of said stocker with said supporting portion being slidably fitted in one of said horizontal guide grooves.

4. A disk cartridge storage apparatus according to claim 3, wherein said supporting portion of said retaining member has an outer side surface formed with a spring holder on which said biasing means including a coil spring is mounted.

5. A disk cartridge storage apparatus according to claim 3, wherein each of said retaining members further includes a stopper provided at a position to abut against a leading end surface of said cartridge upon insertion of said cartridge to a predetermined position within said stocker, to thereby delimit the storage position of said cartridge.

## Patentansprüche

1. Lagervorrichtung für Plattenkassetten, die folgendes aufweist:
eine Aufnahmeeinrichtung (7), die ein Paar von gegenüberstehenden Seitenwänden (7a) hat, um gleitbar und entnehmbar Plattenkassetten (3) zu lagern, die jeweils eine Informationsaufzeichnungsplatte (4) enthalten;
Festhalteeinrichtungen (8), die an den gegenüberstehenden Seitenwänden (7a) der Aufnahmeeinrichtung (7) vorgesehen sind, um eine in der Aufnahmeeinrichtung (7) angeordnete Plattenkassette (3) in einer Lagerposition zu halten; und
Vorspanneinrichtungen (12), um die Festhalteeinrichtungen (8) in eine Festhalteposition vorzuspannen, in der die Festhalteeinrichtungen (8) veranlaßt werden, mit Festhalteaussparungen (3a) in Eingriff zu gelangen, die jeweils in gegenüberstehenden Seitenflächen der Plattenkassette (3) ausgebildet sind;
wobei die Festhalteeinrichtungen (8) so aufgebaut sind, daß die Kraft, die zum Einsetzen der Plattenkassette (3) in die Lagerposition in der Aufnahmeeinrichtung (7) erforderlich ist, kleiner als die Kraft ist, die zur Entnahme der Plattenkassette (3) aus der Aufnahmeeinrichtung (7) erforderlich ist.

2. Lagervorrichtung für Plattenkassetten nach Anspruch 1, wobei die Festhalteeinrichtungen eine Vielzahl von paarweisen Festhalteelementen aufweist, die über Schwenkbereiche an den Seitenwänden der Aufnahmeeinrichtung so angebracht sind, daß sie zwischen der Festhalteposition und einer Freigabeposition schwenkbar sind, wobei die Festhalteelemente Arretiervorsprünge haben, die jeweils in inneren Oberflächen der Festhalteelemente, die den Seitenwänden der Kassette zugewandt sind, ausgebildet sind, wobei die Arretiervorsprünge an der Festhalteposition mit Festhalteaussparungen in Eingriff bringbar sind, die in gegenüberstehenden Seitenwänden der Kassette ausgebildet sind, wobei die Arretiervorsprünge so angeordnet sind, daß ein Widerstand, der auf die Kassette von den Festhalteeinrichtungen infolge des Eingriffs zwischen den Arretiervorsprüngen und den Festhalteaussparungen beim Einführen der Kassette aufgebracht wird, kleiner als ein Widerstand ist, der auf die Kassette von den Festhalteelementen infolge des Eingriffs zwischen den Arretiervorsprüngen und der Kassette beim Herausziehen derselben aufgebracht wird.

3. Lagervorrichtung für Plattenkassetten nach Anspruch 2, wobei jede von den Seitenwänden der Aufnahmeeinrichtung mit einem Bereich einer vertikal verlaufenden Nut und einer Vielzahl von Führungsnuten, die von der vertikalen Nut in Horizontalrichtung ausgehen, versehen ist, und wobei jedes der Festhalteelemente den Schwenkbereich mit einer zylindrischen Gestalt, einen flachen Abstützbereich, der von dem Schwenkbereich in einer zu dessen Achse orthogonalen Richtung ausgeht, und den Arretiervorsprung mit bogenförmiger Gestalt aufweist, der von einer inneren Seite des Abstützbereichs vorspringt, wobei der zylindrische Schwenkbereich in die vertikale Nut, die in der Seitenwand der Aufnahmeeinrichtung ausgebildet ist, drehbar eingesetzt ist und der Abstützbereich in eine der horizontalen Führungsnuten gleitbar eingesetzt ist.

4. Lagervorrichtung für Plattenkassetten nach Anspruch 3, wobei der Abstützbereich des Festhalteelements eine äußere Seitenfläche hat, die mit einer Federhalterung ausgebildet ist, an der die Vorspanneinrichtung angebracht ist, die eine Wickelfeder aufweist.

5. Lagervorrichtung für Plattenkassetten nach Anspruch 3, wobei jede der Festhalteeinrichtungen außerdem einen Anschlag aufweist, der in einer Position vorgesehen ist, so daß er beim Einführen der Kassette in eine vorbestimmte Position in der Aufnahmeeinrichtung gegen eine vordere Endfläche der Kassette anliegt, um dadurch die Lagerposition der Kassette zu begrenzen.

## Revendications

1. Appareil de stockage de cassettes à disques, comprenant :
un dispositif de stockage (7) comportant une paire de parois latérales opposées (7a) pour stocker de façon coulissante et amoviblement des cassettes à disques (3), chacune contenant un disque d'enregistrement d'informations (4) ;
des moyens de retenue (8) prévus aux parois latérales opposées (7a) dudit dispositif de stockage (7) pour retenir une cassette à disques (3) placée dans ledit dispositif de stockage (7) à une position de stockage ; et
des moyens de sollicitation (12) pour solliciter lesdits moyens de retenue (8) vers une position de retenue où lesdits moyens de retenue (8) sont amenés à s'engager dans des évidements de retenue (3a) ménagés dans des surfaces latérales opposées de ladite cassette à disques (3), respectivement ;
dans lequel lesdits moyens de retenue (8) sont construits de façon que la force nécessaire pour insérer ladite cassette à disques (3) dans ladite position de stockage dans ledit dispositif de stockage (7) est plus petite que la force nécessaire pour sortir ladite cassette à disques (3) dudit dispositif de stockage (7).

2. Appareil de stockage de cassettes à disques selon la revendication 1, dans lequel lesdits moyens de retenue comportent plusieurs éléments de retenue appariés installés par des parties pivotantes aux parois latérales dudit dispositif de stockage de façon à pouvoir tourner entre ladite position de retenue et une position de repos, lesdits éléments de retenue comportant des saillies de verrouillage formées dans des surfaces internes desdits éléments de retenue orientés vers lesdites parois latérales de ladite cartouche, respectivement, lesdites saillies de vérouillage pouvant être mises en prise avec des évidements de retenue ménagés dans des parois latérales opposées de ladite cartouche, respectivement, à ladite position de retenue, lesdites saillies de verrouillage étant agencées de façon qu'une traction appliquée à ladite cartouche par lesdits moyens de retenue par suite de la mise en prise entre lesdites saillies de verrouillage et lesdits évidements de retenue, respectivement, lors de l'insertion de ladite cassette est plus petite qu'une traction appliquée à ladite cassette par lesdits éléments de retenue par suite de la mise en prise entre lesdites saillies de verrouillage et ladite cassette lors du retrait de celle-ci.

3. Appareil de stockage de cassettes à disques selon la revendication 2, dans lequel chacune des parois latérales dudit dispositif de stockage est pourvue d'une longueur d'une rainure s'étendant verticalement et de plusieurs rainures de guidage s'étendant horizontalement de ladite rainure verticale, et dans lequel chacun desdits éléments de retenue inclut ladite partie pivotante d'une forme cylindrique, une partie de support plate s'étendant de ladite partie pivotante dans une direction orthogonale à l'axe de celle-ci, et ladite saillie de verrouillage de forme arquée faisant saillie d'un côté interne de ladite partie de support, ladite partie pivotante cylindrique étant ajustée de manière rotative dans ladite rainure verticale ménagée dans ladite paroi latérale dudit dispositif de stocakge, ladite partie de support étant ajustée de façon coulissante dans une desdites rainures de guidage horizontales.

4. Appareil de stockage de cassettes à disques selon la revendication 3, dans lequel ladite partie de support dudit élément de retenue a une surface latérale extérieure présentant un élément de retenue à ressort sur lequel ledit moyen de sollicitation incluant un ressort hélicoïdal est monté.

5. Appareil de stockage de cassettes à disques selon la revendication 3, dans lequel chacun desdits éléments de retenue comporte en outre une butée d'arrêt prévue à une position pour buter contre une surface d'extrémité avant de ladite cassette lors de l'insertion de ladite cassette dans une position prédéterminée dans ledit dispositif de stockage pour délimiter ainsi la position de stockage de ladite cartouche.
